# EUROPEAN PATENT APPLICATION

(11) **EP 4 270 291 A1**
(43) Date of publication of application: **01.11.2023**
(21) Application number: 23168703.9
(22) Date of filing: 19.04.2023
(51) Int. Cl.: G06Q 30/0201, G06Q 30/0601

(54) **METHOD AND COMPUTER DEVICE TO RECOMMEND RELATED PRODUCT TECHNICAL FIELD**

(30) Priority: 29.04.2022 KR 20220053473; 20.06.2022 KR 20220074854
(71) Applicant: Naver Corporation, Seongnam-si, Gyeonggi-do 13561 (KR)
(72) Inventor: KIM, Choongki, Seongnam-si 13561 (KR); KIM, Dong Hyun, Seongnam-si 13561 (KR); YANG, Min-Chul, Seongnam-si 13561 (KR); LEE, Jung-Tae, Seongnam-si 13561 (KR)
(74) Representative: V.O.

(57) **Abstract**

Disclosed are a method, a computer device, and a non-transitory computer-readable recording medium to recommend a related product. The method to recommend the related product may include constructing a contrastive pair dataset for a natural language inference task using content information related to a product based on history of the product in a shopping domain; and generating a product recommendation model to apply to the shopping domain through pre-training of a language model for the natural language inference task using the contrastive pair dataset.

## Description

### TECHNICAL FIELD

The following description relates to technology for recommending a related product.

### RELATED ART

In general, an Internet product recommendation service may select and recommend a product optimized for an individual based on the individual's purchase history.

As a method generally used for product recommendation, an algorithm, for example, a collaborative filtering algorithm of selecting similar users having similar purchase history to that of a target user for which a product is to be recommended and recommending a product not purchased by the target user among products purchased by the similar users and an association rule mining algorithm of recommending a product with a high simultaneous purchase probability or simultaneous click probability for each product using purchase history of a plurality of users.

For example, Korean Patent Registration No. 10-0882716 (registered on February 2, 2009) describes technology for automatically recommending product information on a product using a product code, a product name, or a model name of the product recognized by an information recommendation agent installed on a user terminal.

### SUMMARY

Example embodiments provide a related product recommendation model robust for a cold item based on a natural language inference task that classifies a relation between sentences.

According to example embodiments, there is provided a method performed by a computer device including at least one processor configured to execute computer-readable instructions included in a memory, the method including constructing, by the at least one processor, a contrastive pair dataset for a natural language inference task using content information related to a product based on history of the product in a shopping domain; and generating, by the at least one processor, a product recommendation model to apply to the shopping domain through pre-training of a language model for the natural language inference task using the contrastive pair dataset.

According to an aspect, the constructing may include constructing the contrastive pair dataset by selecting hypothesis products corresponding to a plurality of positive samples and a plurality of negative samples for each premise product.

According to another aspect, the constructing may include constructing a positive data pair that includes content information of each product for a product pair having an entailment relation; and constructing a positive data pair that includes content information of each product for a product pair having a contradiction relation.

According to still another aspect, the constructing may include selecting a product pair clicked within a time limit as a positive sample; and determining a product selected as the positive sample as a seed and selecting a product unselected within the time limit from among products displayed with a seed product as a negative sample.

According to still another aspect, the time limit may be determined based on at least one of a purchase conversion rate for a clicked product and a category change level.

According to still another aspect, the selecting as the positive sample may include excluding at least one of products in some categories and display-biased products from a selection target of the positive sample.

According to still another aspect, the selecting as the negative sample may include selecting, as the negative sample, a product of which the number of displays is greater than or equal to a certain level from among products unclicked within the time limit.

According to still another aspect, the generating may include generating the product recommendation model by fine-tuning a Bidirectional Encoder Representations from Transformer (BERT) model with the natural language inference task using the contrastive pair dataset.

According to still another aspect, the generating may include fitting a correlation status between a premise product and a hypothesis product through a method of performing encoding and softmax for the premise product and the hypothesis product by simultaneously inputting content information in a natural language to a single network.

According to still another aspect, the method may further include expanding, by the at least one processor, the product recommendation model to a combined learning model by using the product recommendation model as a basic model and by jointly learning a Siamese network with the basic model.

According to still another aspect, the expanding may include acquiring a first loss based on the natural language inference task and a second loss based on the Siamese network using a single encoding model and then optimizing the product recommendation model with a final loss that is backward computed from the first loss and the second loss.

According to still another aspect, the expanding may include optimizing the product recommendation model with a final loss that is acquired as a weighted sum of the first loss based on the natural language inference task and the second loss based on the Siamese network.

According to still another aspect, the method may further include recommending, by the at least one processor, a related product based on content information of a given reference product by applying the product recommendation model for the reference product.

According to still another aspect, the recommending may include constructing a related product pool for the reference product based on embeddings of individual products based on the Siamese network; and re-ranking a correlation level with the reference product for the related product pool through an inference result of the natural language inference task.

According to example embodiments, there is provided a computer device including at least one processor configured to execute computer-readable instructions included in a memory. The at least one processor is configured to process a process of constructing a contrastive pair dataset for a natural language inference task using content information related to a product based on history of the product in a shopping domain; and a process of generating a product recommendation model to apply to the shopping domain through pre-training of a language model for the natural language inference task using the contrastive pair dataset.

According to some example embodiments, it is possible to service large-scale data through a model that learns a correlation between two products using content information in natural language based on a natural language inference task that classifies a relation between sentences and to recommend a product with insufficient user data, such as a purchase history, as a related product.

According to some example embodiments, it is possible to fit a dynamic correlation status between products through encoding that references mutual data in a corresponding network by simultaneously inputting a reference product and a product to be compared to a single network and to implement a related product recommendation model that includes history information as well as content information on a product.

According to some example embodiments, it is possible to construct a more dynamic and highly variable embedding space as a model for related product recommendation by combining a Siamese network with a natural language inference task-based model.

### BRIEF DESCRIPTION OF DRAWINGS

FIG. 1 is a diagram illustrating an example of a network environment according to an example embodiment;
FIG. 2 is a diagram illustrating an example of a computer device according to an example embodiment;
FIG. 3 is a flowchart illustrating an example of a method performed by a computer device according to an example embodiment;
FIGS. 4 and 5 illustrate examples of an embedding space of a related product;
FIG. 6 illustrates an example of a structure of a Siamese network;
FIG. 7 is a flowchart illustrating a process of generating a related product recommendation model according to an example embodiment;
FIG. 8 illustrates an example of a contrastive pair dataset of a natural language inference task according to an example embodiment; and
FIGS. 9 and 10 illustrate examples of a structure of a natural language inference task-based network according to an example embodiment.

### BEST MODE

Hereinafter, some example embodiments will be described with reference to the accompanying drawings.

The example embodiments relate to technology for recommending a related product.

The example embodiments including disclosures herein may provide a related product recommendation model robust for a cold item based on a natural language inference task that classifies a relation between sentences.

A related product recommendation system according to the example embodiments may be implemented by at least one computer device and a related product recommendation method according to the example embodiments may be performed by at least one computer device included in the related product recommendation system. Here, a computer program according to an example embodiment may be installed and executed on the computer device, and the computer device may perform the related product recommendation method according to the example embodiments under control of the executed computer program. The aforementioned computer program may be stored in a computer-readable recording medium to computer-implement the related product recommendation method in conjunction with the computer device.

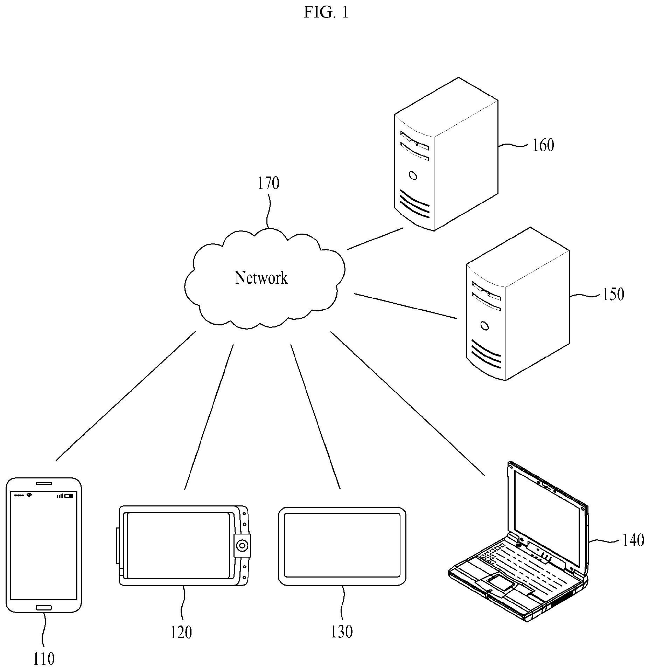

FIG. 1 illustrates an example of a network environment according to an example embodiment. Referring to FIG. 1, the network environment may include a plurality of electronic devices 110, 120, 130, and 140, a plurality of servers 150 and 160, and a network 170. FIG. 1 is provided as an example only. The number of electronic devices or the number of servers is not limited thereto. Also, the network environment of FIG. 1 is provided as an example only among environments applicable to the example embodiments and the environment applicable to the example embodiments is not limited to the network environment of FIG. 1.

Each of the plurality of electronic devices 110, 120, 130, and 140 may be a fixed terminal or a mobile terminal that is configured as a computer device. For example, the plurality of electronic devices 110, 120, 130, and 140 may be a smartphone, a mobile phone, a navigation device, a computer, a laptop computer, a digital broadcasting terminal, a personal digital assistant (PDA), a portable multimedia player (PMP), a tablet personal computer (PC), and the like. For example, although FIG. 1 illustrates a shape of a smartphone as an example of the electronic device 110, the electronic device 110 used herein may refer to one of various types of physical computer devices capable of communicating with other electronic devices 120, 130, and 140 and/or the servers 150 and 160 over the network 170 in a wireless or wired communication manner.

The communication scheme is not limited and may include a near field wireless communication scheme between devices as well as a communication scheme using a communication network (e.g., a mobile communication network, wired Internet, wireless Internet, and a broadcasting network) includable in the network 170. For example, the network 170 may include at least one of network topologies that include a personal area network (PAN), a local area network (LAN), a campus area network (CAN), a metropolitan area network (MAN), a wide area network (WAN), a broadband network (BBN), and the Internet. Also, the network 170 may include at least one of network topologies that include a bus network, a star network, a ring network, a mesh network, a star-bus network, a tree or hierarchical network, and the like. However, they are provided as examples only.

Each of the servers 150 and 160 may be configured as a computer device or a plurality of computer devices that provides an instruction, a code, a file, content, a service, etc., through communication with the plurality of electronic devices 110, 120, 130, and 140 over the network 170. For example, the server 150 may be a system that provides a service (e.g., a product recommendation service, etc.) to the plurality of electronic devices 110, 120, 130, and 140 connected over the network 170.

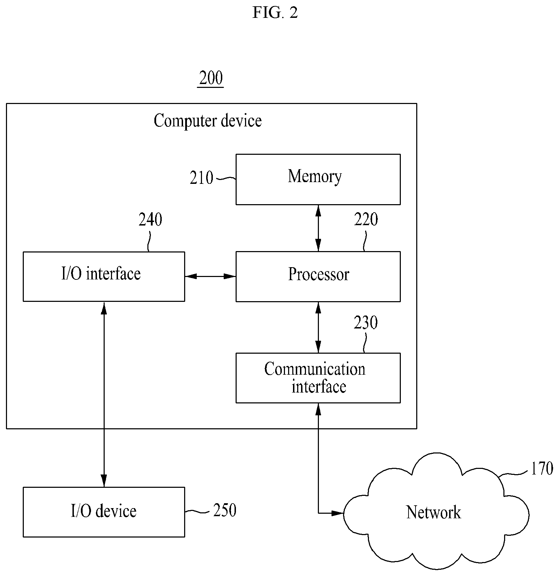

FIG. 2 is a block diagram illustrating an example of a computer device according to an example embodiment. Each of the plurality of electronic devices 110, 120, 130, and 140 of FIG. 1 or each of the servers 150 and 160 may be implemented by a computer device 200 of FIG. 2.

Referring to FIG. 2, the computer device 200 may include a memory 210, a processor 220, a communication interface 230, and an input/output (I/O) interface 240. The memory 210 may include a permanent mass storage device, such as a random access memory (RAM), a read only memory (ROM), and a disk drive, as a computer-readable recording medium. The permanent mass storage device, such as ROM and a disk drive, may be included in the computer device 200 as a permanent storage device separate from the memory 210. Also, an OS and at least one program code may be stored in the memory 210. Such software components may be loaded to the memory 210 from another computer-readable recording medium separate from the memory 210. The other computer-readable recording medium may include a computer-readable recording medium, for example, a floppy drive, a disk, a tape, a DVD/CD-ROM drive, a memory card, etc. According to other example embodiments, software components may be loaded to the memory 210 through the communication interface 230, instead of the computer-readable recording medium. For example, the software components may be loaded to the memory 210 of the computer device 200 based on a computer program installed by files received over the network 170.

The processor 220 may be configured to process instructions of a computer program by performing basic arithmetic operations, logic operations, and I/O operations. The computer-readable instructions may be provided from the memory 210 or the communication interface 230 to the processor 220. For example, the processor 220 may be configured to execute received instructions in response to the program code stored in the storage device, such as the memory 210.

The communication interface 230 may provide a function for communication between the communication apparatus 200 and another apparatus (e.g., the aforementioned storage devices) over the network 170. For example, the processor 220 of the computer device 200 may deliver a request or an instruction created based on a program code stored in the storage device such as the memory 210, data, and a file, to other apparatuses over the network 170 under control of the communication interface 230. Inversely, a signal, an instruction, data, a file, etc., from another apparatus may be received at the computer device 200 through the network 170 and the communication interface 230 of the computer device 200. For example, a signal, an instruction, data, etc., received through the communication interface 230 may be delivered to the processor 220 or the memory 210, and a file, etc., may be stored in a storage medium (e.g., the permanent storage device) further includable in the computer device 200.

The I/O interface 240 may be a device used for interfacing with an I/O device 250. For example, an input device may include a device, such as a microphone, a keyboard, a mouse, etc., and an output device may include a device, such as a display, a speaker, etc. As another example, the I/O interface 240 may be a device for interfacing with an apparatus in which an input function and an output function are integrated into a single function, such as a touchscreen. The I/O device 250 may be configured as a single apparatus with the computer device 200.

Also, according to other example embodiments, the computer device 200 may include the number of components greater than or less than the number of components shown in FIG. 2. However, there is no need to clearly illustrate many components according to the related art. For example, the computer device 200 may include at least a portion of the I/O device 250, or may further include other components, for example, a transceiver, a database, etc.

Hereinafter, example embodiments of a method and system for recommending a related product are described.

A collaborative filtering-based recommendation model, a Meta Product2Vector (MPV)-based recommendation model, a Siamese network and triplet network-based recommendation are used to recommend a related product in a shopping domain.

The recommendation performance for the aforementioned related product recommendation models depends on the quantity of history by a user, for example, how much or how little the history by the user is. Since recommendation is made based on products having a certain level of history, a recommendation bias phenomenon that history is concentrated on some products easily occurs. That is, a cold item with insufficient history may not readily acquire a recommendation opportunity compared to a warm item with sufficient history.

The example embodiments provide a new methodology capable of recommending various products although history between a user and a product is little and may provide a related product recommendation model robust for a cold item based on a sentence entailment relation task that classifies a relation between sentences.

In the present specification, history may refer to click history or purchase history of a user for a product in a shopping domain and may also refer to an interaction between a product and the user, such as addition to a shopping cart and setting such as liking or like.

The computer device 200 according to the example embodiment may provide a client with a product recommendation service through connection to an exclusive application installed on the client and a website/mobile site related to the computer device 200. A related product recommendation system implemented as a computer may be configured in the computer device 200. For example, the related product recommendation system may be configured in a form of a program that independently operates or may be configured in an in-app form of a specific application to be operable on the specific application.

The processor 220 of the computer device 200 may be implemented as a component to perform the following related product recommendation method. Depending on example embodiments, components of the processor 220 may be selectively included in or excluded from the processor 220. Also, depending on example embodiments, components of the processor 220 may be separated or merged for expressions of functions of the processor 220.

The processor 220 and the components of the processor 220 may control the computer device 200 to perform operations included in the following related product recommendation method. For example, the processor 220 and the components of the processor 220 may be configured to execute an instruction according to a code of at least one program and a code of an OS included in the memory 210.

Here, the components of the processor 220 may be representations of different functions performed by the processor 220 in response to an instruction provided from a program code stored in the computer device 200.

The processor 220 may read a necessary instruction from the memory 210 to which instructions related to control of the computer device 200 are loaded. In this case, the read instruction may include an instruction for controlling the processor 220 to perform the following operations.

Operations included in the following related product recommendation method may be performed in order different from illustrated order and a portion of the operations may be omitted or an additional process may be further included.

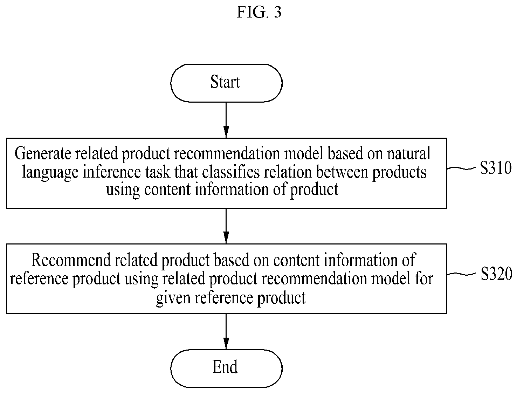

FIG. 3 is a flowchart illustrating an example of a method performed by a computer device according to an example embodiment.

Referring to FIG. 3, in operation S310, the processor 220 may generate a related product recommendation model based on a natural language inference task that classifies a relation between products using content information of a product. The content information refers to side information in natural language in association with a corresponding product and may include, for example, a product name, a brand, a model name, a category, and a product attribute. The natural language inference task relates to determining whether a hypothesis sentence is contextually connected to a premise sentence and represents a task in a natural language field that classifies a relation between two sentences into entailment (i.e., true) or contradiction (i.e., false). For example, the processor 220 may generate a model that well understands content information in a shopping domain based on a language model. The language model may use the natural language inference task as a task for pre-training called next sentence prediction. The processor 220 may generate the related product recommendation model using a method of pre-training the language model to determine correlation between products through the natural language inference task using content information in natural language.

In operation S320, the processor 220 may recommend a related product based on content information of a given reference product by applying the related product recommendation model for the reference product. The processor 220 may determine a product clicked or a product purchased by the user as the reference product and may recommend, as the related product, a product of the same category capable of replacing the reference product and a product of another category having high compatibility as a product that may be well used with the reference product. Here, the processor 220 may provide a product recommendation service by initially generating a product pool in which products have a mutual probability as related products and then re-ranking a correlation level for the product pool through an inference result of the natural language inference task. The processor 220 may infer a correlation between two sentences by determining content information of the reference product as a premise sentence and determining content information of a product to be compared as a hypothesis sentence and may recommend a product that is predicted to have an entailment relation with the reference product as the related product.

Hereinafter, a process of generating a related product recommendation model robust for a cold item is described as follows:
A collaborative filtering-based recommendation model that is one of methodologies for solving a cold item recommendation issue uses a method of generating an embedding based on history by the user for an item and generating an embedding based on a plurality of side information of the item and then optimizing the embedding of the item generated based on the history to be close to the embedding of the item generated based on the side information. In the case of using the collaborative filtering-based recommendation model, a related product may be recommended based on side information of a corresponding item for an item having no history.

However, in the case of using the collaborative filtering-based recommendation model, a data size increases and a large amount of learning time and resources are required due to collaborative filtering. Therefore, there are some limitations and unsuitability in applying to a service having large-scaled data, such as users or items, as in shopping.

An MPV-based recommendation model that is another one of methodologies for solving the cold item recommendation issue uses a learning method to increase a similarity between an eigenvector acquired using an ID of a product and a vector in which content information is encoded for a related product pair. That is, the MPV-based recommendation model refers to a model that generates a single embedding by encoding not only a characteristic through history but also content information such as a product name, a brand, and a category, and performs optimization such that a similarity between the generated embedding and an embedding of a product clicked together may increase.

However, the MPV-based recommendation model increases only a similarity for a positive sample and thus, has an effect of making embeddings between classes close, but, on the contrary, fails in putting some distance in embeddings between the classes. Also, since a history-based embedding is absent for a cold item having no history in the MPV-based recommendation model, recommendation is made only with a similarity between contents, which differs from a warm item capable of using a history-based embedding.

A Siamese network-based recommendation model that is another one among methodologies for solving the cold item recommendation issue uses a method of learning an embedding encoded as content information of a product for a mutually related product pair using a contrastive loss (a triplet loss in the case of a triplet network).

A related product may be defined as two types. A first type represents the same type of a product that may replace a seed product and a second type represents a different type of a product that is compatible with a seed as a product that may be well used with the seed product. In the case of the first type, it is the same type of a product as the seed product and they may be mutually related products. Therefore, the first type of a related product may be clustered in an embedding space using a similarity. However, in a case in which the first type and the second type are mixed, a type of a product different from the seed product may be included and they may not be related products with respect to each other. Therefore, clustering is difficult.

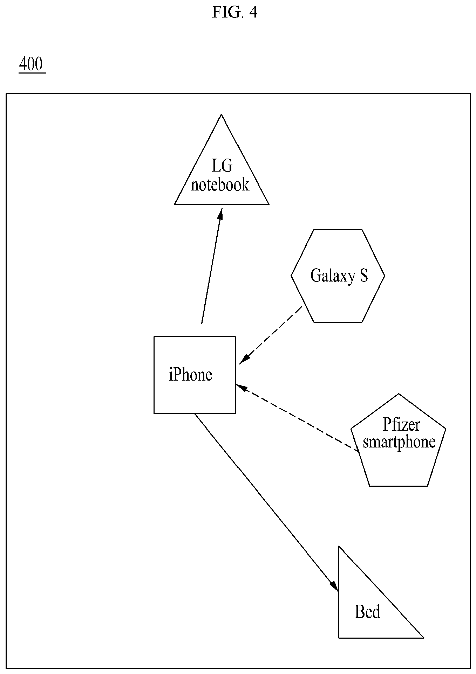

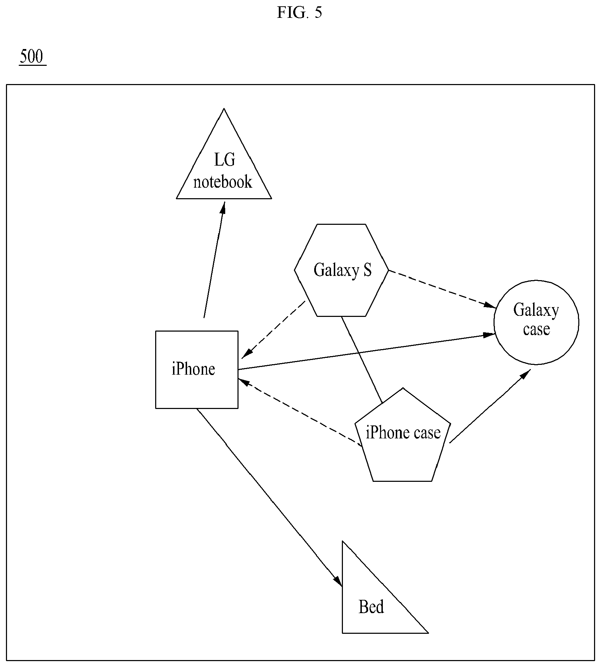

FIG. 4 illustrates an example of a first type of an embedding space 400 and FIG. 5 illustrates an example of an embedding space 500 in which the first type and the second type are mixed.

Referring to FIG. 4, in the first type of the embedding space 400, both 'Galaxy S' and 'Pfizer smartphone' for the seed product 'iPhone' fall under the category of smartphone and are the same type of products. Therefore, since 'Galaxy S' and 'Pfizer smartphone' that are related products of the seed 'iPhone' are related products with respect to each other, there is no difficulty in clustering.

Referring to FIG. 5, in the embedding space 500 in which the first type and the second type are mixed, 'Galaxy S' that is a first type of a product and 'iPhone case' that is a second type of a product may be included as related products of the seed product 'iPhone', but 'Galaxy S' and 'iPhone case' are not related products. Therefore, although the seed 'iPhone' tries to fit 'Galaxy S' and 'iPhone case' at a location close to 'iPhone', 'Galaxy S' and 'iPhone case' are fitted to be away from each other. Therefore, the products may not be gathered into a single cluster. Also, 'Galaxy case' that is a related product of 'Galaxy S' is not a related product of 'iPhone case' and thus, needs to be away therefrom but to be close to 'Galaxy S' and 'Galaxy S' needs to also be close to the seed 'iPhone'. Therefore, they may not be gathered into a single cluster.

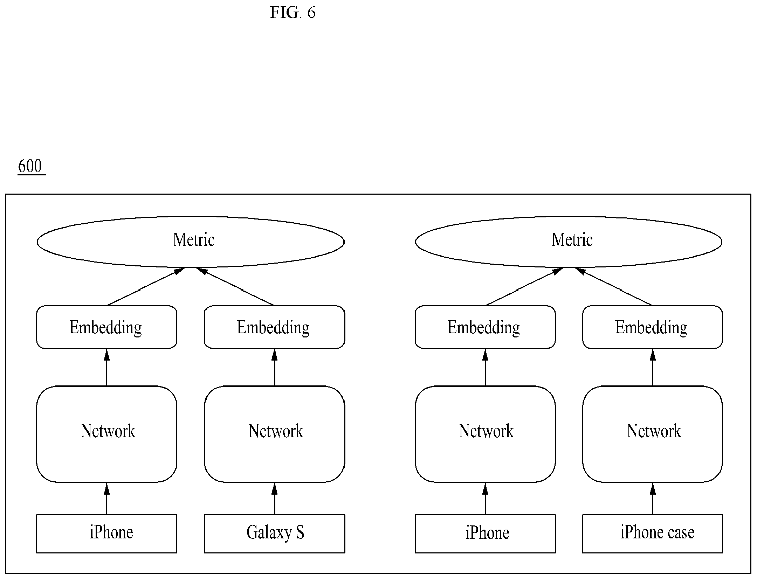

FIG. 6 illustrates an example of a structure of a Siamese network.

Referring to FIG. 6, a Siamese network 600 is based on a metric learning and is a model that uses a metric for computing a distance that represents a similarity between characteristics of two targets. The Siamese network 600 is trained to be away from a product having a characteristic dissimilar to that of a reference product to be anchored and refers to a network that shares a weight for the reference product and a product to be compared and generates an individual embedding of each product. Therefore, although the product to be compared changes, an embedding of the reference product does not change. Therefore, due to a fixed value of embedding, it is difficult to cluster a dynamic correlation between products.

A metric learning of the Siamese network 600 has excellent data clustering performance. However, if data itself is a model to not be readily clustered, the overall model performance may be degraded. Also, in the case of a service having large-scaled data, such as a shopping domain, a service restriction occurs as a very large sized embedding is required.

The example embodiment may generate a related product recommendation model in a structure in which a dynamic correlation between products may be easily fitted.

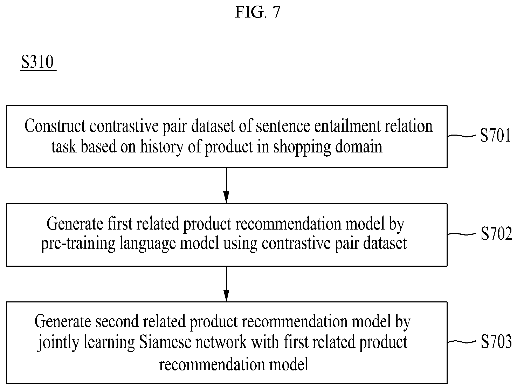

FIG. 7 is a flowchart illustrating a process of generating a related product recommendation model according to an example embodiment.

Referring to FIG. 7, in operation S701, the processor 220 may construct a contrastive pair dataset of a sentence entailment relation task (natural language inference task) based on history of a product in a shopping domain.

For example, the processor 220 may select a product pair clicked within a time limit preset by a user as a positive sample. Here, the time limit may be determined in consideration of a purchase conversion rate for a clicked product, a product category change level, and the like. For example, if the user clicks on another product within 10 minutes after clicking on one product, content information of two products may be configured as a positive dataset. In the shopping domain, there are factors that make it difficult to acquire a positive sample, such as an abusing user, a difference in distribution of products by category, and a popular product and thus, category restriction or removal of display bias may be additionally applied. For example, products in some categories or products with a high display rate compared to other products may be excluded from a target to be selected as a positive sample. Also, although it is the same product, the processor 220 may add and use a product with a different name in a category as a positive sample, such that major context for the product may be verified.

The processor 220 may determine a product included in a positive sample as a seed and may select a product unclicked within the time limit from among products displayed with the seed as a negative sample. In particular, the processor 220 may select, as the negative sample, a product of which the number of displays is greater than or equal to a certain level from among products unclicked within the time limit after the seed is clicked.

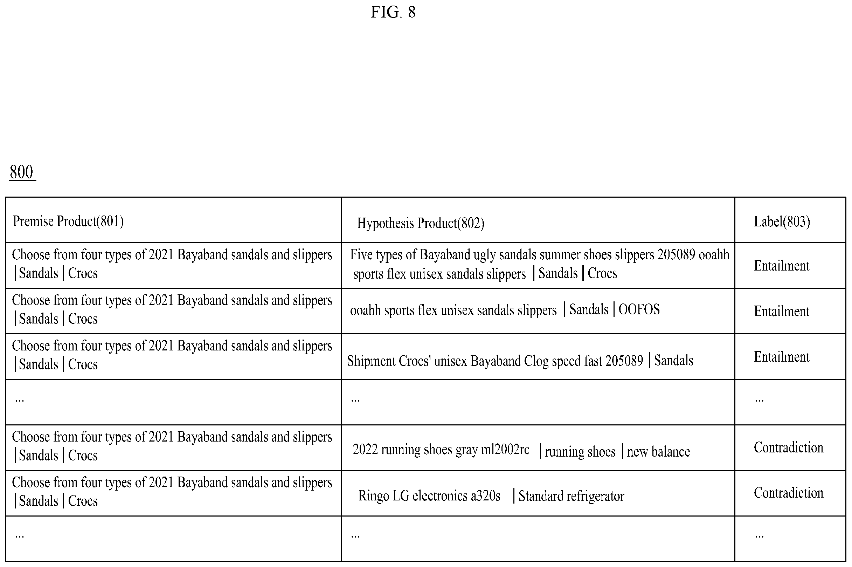

The processor 220 may select a positive sample and a negative sample based on a history and may construct a dataset using content information in natural language for products selected as the positive sample and the negative sample. Referring to FIG. 8, to learn history information as well as content information, the processor 220 may select hypothesis products 802 corresponding to a plurality of positive samples and negative samples for the same premise product 801 and may construct a dataset 800 for training that includes a positive data pair and a negative data pair. By selecting the hypothesis product 802 for the premise product 801 based on the history, the processor 200 may generate the dataset 800 capable of learning features for history, such as collaborative filtering. The dataset 800 of the sentence entailment relation task may include a classification label 803. In the case of a positive data pair, a label ('entailment') that represents an entailment relation may be defined. In the case of a negative data pair, a label ('contradiction') that represents a contradiction relation may be defined. The processor 220 may additionally adjust the dataset 800 through data analysis and experimentation according to a target task and distribution of raw data.

Referring again to FIG. 7, in operation S702, the processor 220 may generate a first related product recommendation model by pre-retraining a language model using the contrastive pair dataset of the sentence entailment relation task. For example, the processor 220 may implement the first related product recommendation model by adopting a Bidirectional Encoder Representations from Transformer (BERT) model or an Electra small model as a pre-trained language model (PLM) and then performing fine-tuning with a natural language inference task having two labels (entailment relation and contradiction relation).

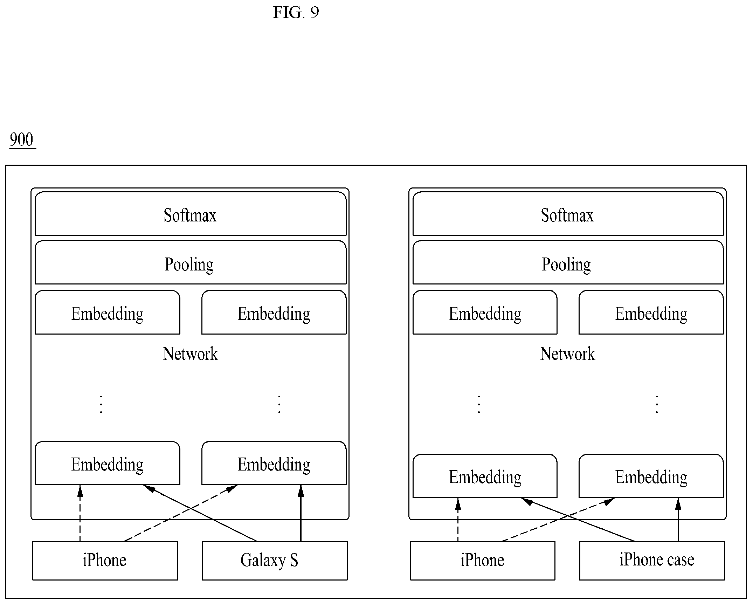

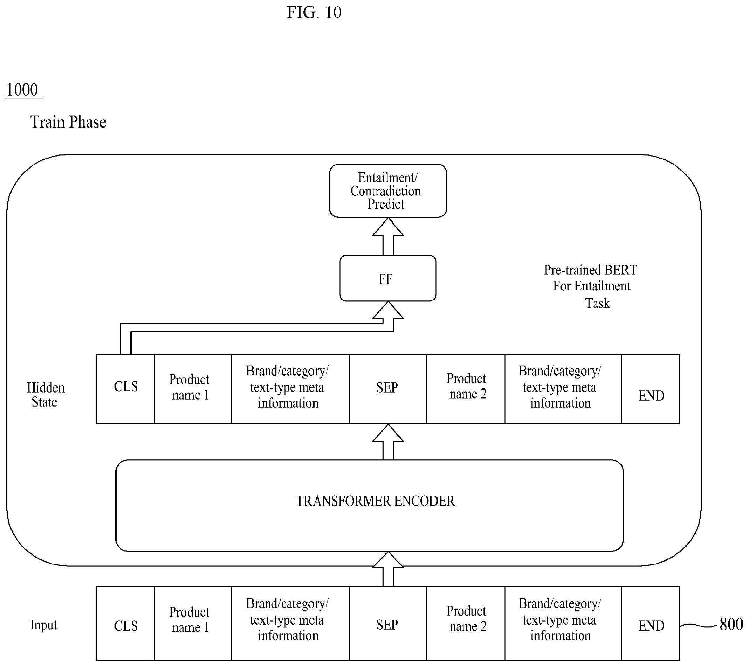

FIGS. 9 and 10 illustrate examples of a structure of a natural language inference task-based network according to an example embodiment.

Referring to FIG. 9, a sentence entailment relation task structure 900 that is a natural language inference task may simultaneously receive an anchor and a comparison sample as input in a single network and may perform encoding and softmax by referring to each other's data in the network. The sentence entailment relation task structure 900 may generate a different internal embedding (hidden state) according to a comparison sample even for the same anchor. In this aspect, since the embedding is not fixed, a dynamic correlation status between products may be easily fitted.

FIG. 10 illustrates an example of a related product recommendation model 1000 in a structure of a sentence entailment relation task.

Referring to FIG. 10, the processor 220 may generate a related product recommendation model 1000 by pre-training a BERT model through a natural language inference task that uses, as input data, a contrastive pair dataset, for example, the dataset 800 including content information of the premise product 801 and the hypothesis product 802. In response to a change of the premise product 801 that is an anchor, the same hypothesis product 802 may be differently internally encoded. Therefore, a fitting issue in the embedding space 500 in which the first type and the second type are mixed may be solved even with a relatively small size model.

The related product recommendation model 1000 that is generated based on a language model, such as the BERT model, may determine a relation between two products based on content information in natural language and accordingly may have capability of well extracting important context from a product name, a brand, and a category, like a general language model.

Referring again to FIG. 7, in operation S703, the processor 220 may generate a second related product recommendation model by expanding the first related product recommendation model to a combined learning model by using the first related product recommendation model as a basic model and by jointly learning a Siamese network with the basic model. The processor 220 may generate the second related product recommendation model by training the model for reducing a final loss that is acquired by sequentially acquiring a loss through a model training using the natural language inference task and a loss through a Siamese network training using a single encoding model and then backward computing the two losses at a time.

A detailed process of generating the second related product recommendation model is described as follows.

A dataset structure for generating the second related product recommendation model is the same as that of the dataset 800 of FIG. 8.

The processor 220 concatenates content information of product A and product B to a single piece of data for a natural language inference task, forwards the same as an input of an encoding model, and then acquires a loss (hereinafter, referred to as a 'natural language inference task loss').

The processor 220 acquires a CLS embedding of a last layer after inputting only content information of product A to the same network and similarly acquires a CLS embedding of a last layer after inputting only content information of product B to the network.

The processor 220 may acquire a similarity distance (e.g., Euclidean distance, etc.) between the CLS embeddings of product A and product B and may configure a loss (hereinafter, a 'Siamese network loss') such that the distance between product A and product may decreases when product A and product B have an entailment relation and the distance may increase when product A and product B have a contraction relation.

The processor 220 may generate the second related product recommendation model by optimizing the model with a final loss that is acquired with a weighted sum of the loss of the natural language inference task and the loss of the Siamese network. Here, the loss of the natural language inference task and the loss of the Siamese network may be applied on a one-to-one basis. Depending on example embodiments, different weights may be applied to the loss of the natural language inference task and the loss of the Siamese network.

The second related product recommendation model may have advantages of two networks. Since the Siamese network is capable of generating an embedding of an individual product, the Siamese network has an advantage of acquiring a product candidate to be recommended through a distance-based embedding. When weights of a network are learned jointly with the natural language inference task that may reference all individual tokens of a product pair in input and hidden state stages, all per-token hidden states from an input embedding to a last layer may be tuned based on more information than when learning only with the Siamese network.

The processor 220 may provide a product recommendation service by initially generating a product pool having a potential as a related product of a reference product using embeddings of individual products based on the Siamese network and then re-ranking a correlation between the product pool and the reference product through an inference result of the natural language inference task.

The first related product recommendation model may be applied as a final model for the product recommendation service and, depending on example embodiments, the second related product recommendation model may also be applied. For example, the processor 220 may differently apply a related product recommendation model according to a category of the reference product or the user. For example, for the user that browses various categories, a related product may be recommended by applying the second related product recommendation model. For the user that browses only a limited category, a related product may be recommended by applying the first related product recommendation model. Also, if the reference product belongs to category A, the related product may be recommended by applying the first related product recommendation model, and if the reference product belongs to category B, the related product may be recommended by applying the second related product recommendation model.

According to some example embodiments, it is possible to service large-scale data through a model that learns a correlation between two products using content information in natural language based on a natural language inference task that classifies a relation between sentences and to recommend a product with insufficient user data, such as a purchase history, as a related product. According to some example embodiments, it is possible to fit a dynamic correlation status between products through encoding that references mutual data in a corresponding network by simultaneously inputting a reference product and a product to be compared to a single network and to implement a related product recommendation model that includes history information as well as content information on a product. According to some example embodiments, it is possible to construct a more dynamic and highly variable embedding space as a model for related product recommendation by combining a Siamese network with a natural language inference task-based model.

The apparatuses described herein may be implemented using hardware components, software components, and/or a combination of hardware components and software components. For example, the apparatuses and the components described herein may be implemented using one or more general-purpose or special purpose computers, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied in any type of machine, component, physical equipment, a computer storage medium or device, to be interpreted by the processing device or to provide an instruction or data to the processing device. The software also may be distributed over network coupled computer systems so that the software is stored and executed in a distributed fashion. The software and data may be stored by one or more computer readable storage media.

The methods according to the above-described example embodiments may be configured in a form of program instructions performed through various computer devices and recorded in computer-readable recording media. Here, the media may continuously store computer-executable programs or may transitorily store the same for execution or download. Also, the media may be various types of recording devices or storage devices in a form in which one or a plurality of hardware components are combined. Without being limited to media directly connected to a computer system, the media may be distributed over the network. Examples of the media include magnetic media such as hard disks, floppy disks, and magnetic tapes; optical media such as CD-ROM and DVDs; magneto-optical media such as floptical disks; and hardware devices that are configured to store program instructions, such as read-only memory (ROM), random access memory (RAM), flash memory, and the like. Examples of other media may include record media and storage media managed by an app store that distributes applications or a site that supplies and distributes other various types of software, a server, and the like.

Although the example embodiments are described with reference to some specific example embodiments and accompanying drawings, it will be apparent to one of ordinary skill in the art that various alterations and modifications in form and details may be made in these example embodiments without departing from the spirit and scope of the claims and their equivalents. For example, suitable results may be achieved if the described techniques are performed in different order, and/or if components in a described system, architecture, device, or circuit are combined in a different manner, and/or replaced or supplemented by other components or their equivalents.

Therefore, other implementations, other example embodiments, and equivalents of the claims are to be construed as being included in the claims.

## Claims

1. A method performed by a computer device comprising at least one processor configured to execute computer-readable instructions included in a memory, the method comprising:
constructing, by the at least one processor, a contrastive pair dataset for a natural language inference task using content information related to a product based on history of the product in a shopping domain; and
generating, by the at least one processor, a product recommendation model to apply to the shopping domain through pre-training of a language model for the natural language inference task using the contrastive pair dataset.

2. The method of claim 1, wherein the constructing comprises constructing the contrastive pair dataset by selecting hypothesis products corresponding to a plurality of positive samples and a plurality of negative samples for each premise product.

3. The method of any preceding claim, wherein the constructing comprises:
constructing a positive data pair that includes content information of each product for a product pair having an entailment relation; and
constructing a positive data pair that includes content information of each product for a product pair having a contradiction relation.

4. The method of any preceding claim, wherein the constructing comprises:
selecting a product pair clicked within a time limit as a positive sample; and
determining a product selected as the positive sample as a seed and selecting a product unselected within the time limit from among products displayed with a seed product as a negative sample.

5. The method of claim 4, wherein the time limit is determined based on at least one of a purchase conversion rate for a clicked product and a category change level.

6. The method of claims 4 or 5, wherein the selecting as the positive sample comprises excluding at least one of products in some categories and display-biased products from a selection target of the positive sample.

7. The method of any of claims 4-6, wherein the selecting as the negative sample comprises selecting, as the negative sample, a product of which the number of displays is greater than or equal to a certain level from among products unclicked within the time limit.

8. The method of any preceding claim, wherein the generating comprises generating the product recommendation model by fine-tuning a Bidirectional Encoder Representations from Transformer (BERT) model with the natural language inference task using the contrastive pair dataset.

9. The method of any preceding claim, wherein the generating comprises fitting a correlation status between a premise product and a hypothesis product through a method of performing encoding and softmax for the premise product and the hypothesis product by simultaneously inputting content information in a natural language to a single network.

10. The method of any preceding claim, further comprising:
expanding, by the at least one processor, the product recommendation model to a combined learning model by using the product recommendation model as a basic model and by jointly learning a Siamese network with the basic model.

11. The method of claim 10, wherein the expanding comprises acquiring a first loss based on the natural language inference task and a second loss based on the Siamese network using a single encoding model and then optimizing the product recommendation model with a final loss that is backward computed from the first loss and the second loss.

12. The method of claims 10 or 11, wherein the expanding comprises optimizing the product recommendation model with a final loss that is acquired as a weighted sum of the first loss based on the natural language inference task and the second loss based on the Siamese network.

13. The method of any of claims 10-12, further comprising:
recommending, by the at least one processor, a related product based on content information of a given reference product by applying the product recommendation model for the reference product.

14. The method of claim 13, wherein the recommending comprises:
constructing a related product pool for the reference product based on embeddings of individual products based on the Siamese network; and
re-ranking a correlation level with the reference product for the related product pool through an inference result of the natural language inference task.

15. A computer device comprising:
at least one processor configured to execute computer-readable instructions included in a memory,
wherein the at least one processor is configured to process: a process of constructing a contrastive pair dataset for a natural language inference task using content information related to a product based on history of the product in a shopping domain; and
a process of generating a product recommendation model to apply to the shopping domain through pre-training of a language model for the natural language inference task using the contrastive pair dataset.
